# EUROPEAN PATENT APPLICATION

(11) **EP 3 470 692 A1**
(43) Date of publication of application: **17.04.2019**
(21) Application number: 17207551.7
(22) Date of filing: 15.12.2017
(51) Int. Cl.: F16B 25/00, F16B 25/10

(54) **WOOD SCREW**

(30) Priority: 16.10.2017 TW 106135327
(71) Applicant: Yao Cheng Co., Ltd., 821 Kaohsiung City (TW)
(72) Inventor: Bai, Yao-Long, 821 Kaohsiung City (TW)
(74) Representative: Cabinet Chaillot

(57) **Abstract**

A wood screw (3) includes a shank (32), a head (31), a drilling portion (33) and a plurality of threads (34) spirally disposed on the shank (32) and the drilling portion, and at least two first ribs (35) extending on the drilling portion between two adjacent thread convolutions of the threads (34). The first ribs extend in a direction different from a screwing direction. Each first rib has two first surfaces (352) protruding from the shank and converging at a first edge (353). The first edges of the first ribs are orientated in the screwing direction. Accordingly, the first ribs assist the drilling portion in enlarging a cutting area to increase the cutting effect and reduce the screwing resistance derived from the screwing operation. The first ribs and the thread convolution cooperate to form three cutting points in cross section, thereby achieving a stable, speedy and effort-saving screwing effect.

## Description

### BACKGROUND OF THE INVENTION

### 1. Field of the Invention

This invention relates to a screw and relates particularly to a wood screw provided with an enlarged cutting area of drilling portion to facilitate a cutting capability.

### 2. Description of the Related Art

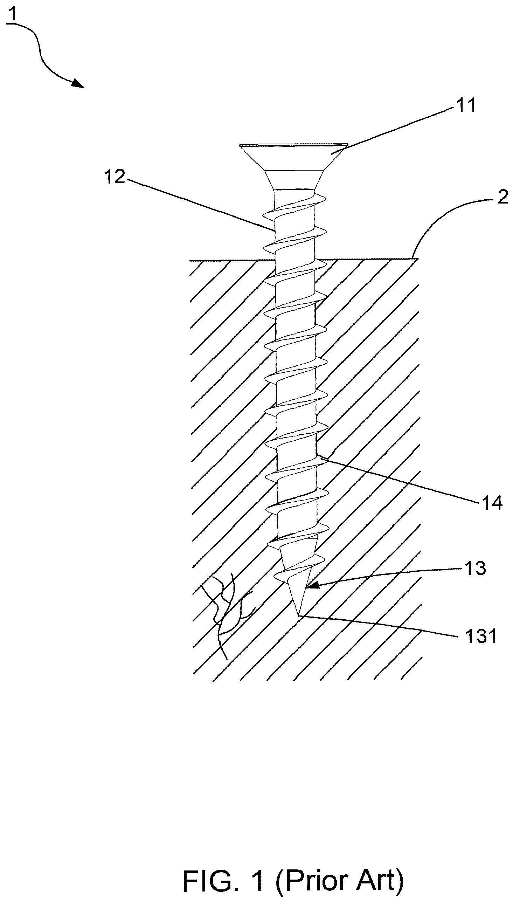

Referring to Fig.**1****,** a conventional fastener **1** comprises a head **11,** a shank **12** extending downwards from the head **11,** a drilling portion **13** connected to an end of the shank **12** and tapering off to a tip **131,** and a plurality of threads **14** spirally disposed on the shank **12** and the drilling portion **13.** The screwing operation of the conventional fastener **1** begins with rendering the tip **131** of the drilling portion **13** to be against a surface of an object **2.** Then, the rotation force is applied to the head **11** to drive the threads **14** to cut the object **2** and further thread the drilling portion **13** and the shank **12** into the object **2,** thereby completing the screwing operation of the conventional fastener **1.**

However, the conventional fastener **1** still has problems. First, fibers contained in the object **2** are broken ineffectively by the threads **14** at the beginning of the screwing operation to result in an entanglement of the fibers around the shank **12** and increase the screwing resistance of the conventional fastener **1.** Hence, the larger rotation force is required to thread the conventional fastener **1** into the object **2** to cause the enhanced use inconvenience.

Second, the entanglement of the fibers around the shank **12** causes that the cut chips resulted from the cutting operation of the threads **14** are excluded ineffectively and accumulate in the object **2.** Further, the object **2** may crack when the conventional fastener **1** keeps screwing downwards and squeezing the accumulated cut chips. Thus, the conventional fastener **1** still needs to be improved.

### SUMMARY OF THE INVENTION

The object of this invention is to provide a wood screw with an enlarged cutting area of drilling portion to increase the cutting efficiency, exclude cut chips quickly, reduce the screwing resistance effectively, and attain the stable, fast and effort-saving screwing effect.

The wood screw of this invention comprises a head, a shank extending downwards therefrom, a drilling portion connected to an end of the shank and opposite to the head, a plurality of threads spirally disposed around the shank and the drilling portion, and at least two first ribs formed on the drilling portion between two adjacent thread convolutions of the threads. The first ribs extend upwards toward an extension direction different from a screwing direction. Each first rib has two first surfaces extending outwards from the shank and converging at a first edge which is positioned in the screwing direction. Hence, the first ribs projecting outwards from the drilling portion increase the cutting area of the drilling portion that helps a cutting capability, thereby enhancing the cutting effect, severing fibers of an object effectively to prevent the entanglement of the fibers, and reducing the resistance derived during the screwing operation. Further, the first ribs and the thread convolution work to form three cutting points in cross section, thereby attaining the fast cutting effect and accelerated evacuation of the cut chips. Therefore, the stable, fast and effort-saving screwing effect is completed.

Preferably, the first rib has at least one end separated from at least one thread convolution of the threads to form a space.

Preferably, two ends of each first rib connect the thread convolutions of the threads.

Preferably, the shank includes a plurality of second ribs spirally disposed thereon and situated between the threads. The second ribs have a helical direction different from the extension direction of the first ribs.

Preferably, at least one second rib spirally extends toward the drilling portion and terminates at a second end. At least one first rib extends upwards toward the shank and terminates at a first end. The second end is situated relative to the first end.

Preferably, each second rib has two second surfaces extending outwards from the shank and converging at a second edge which is positioned in the screwing direction.

### BRIEF DESCRIPTION OF THE DRAWINGS

Fig. **1** is a schematic view showing a conventional fastener;
Fig. **2** is a schematic view showing a first preferred embodiment of this invention;
Fig. **2A** is an enlarged view showing a partial element of Fig. 2;
Fig. **3** is a top plan view as seen along the line A-A of Fig. 2;
Fig. **4** is a schematic view showing a simulation when the first preferred embodiment screws into an object; and
Fig. **5** is an enlarged view showing a second preferred embodiment of this invention.

### DETAILED DESCRIPTION OF THE PREFERRED EMBODIMENTS

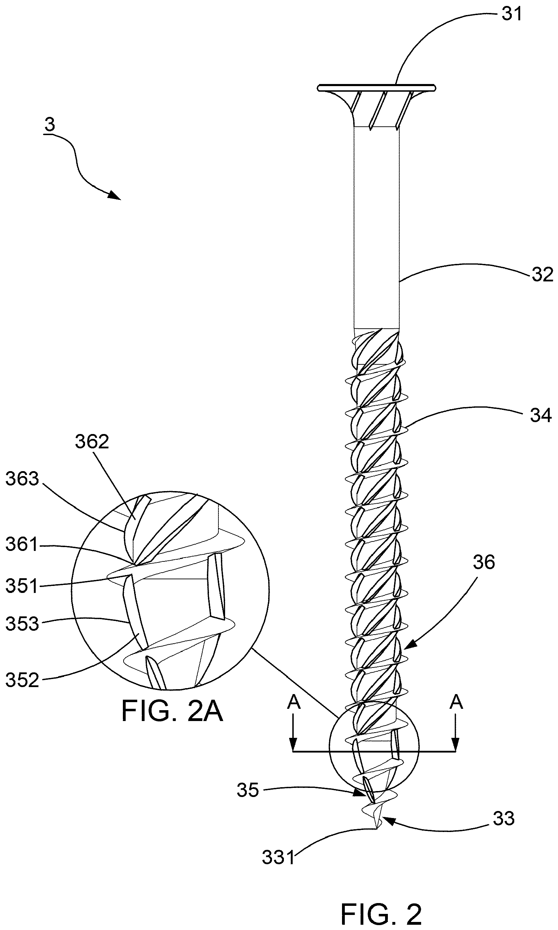

Referring to Fig. **2****,** a first preferred embodiment of a wood screw **3** of this invention is disclosed. The wood screw **3** includes a head **31,** a shank **32** extending downwards from the head **31,** a drilling portion **33** fitted at an end of the shank **32** and opposite to the head **31,** a plurality of threads **34** spiraled on the shank **32** and the drilling portion **33,** and at least two first ribs **35** formed on the drilling portion **33** between two abutting thread convolutions of the threads **34.** The drilling portion **33** gradually tapers off to a tip **331.** Referring to Fig. **2** and Fig. **2A****,** in this preferred embodiment, the shank **32** includes a plurality of second ribs **36** spirally disposed thereon and situated between the threads **34.** The first ribs **35** and the second ribs **36** are formed by directly stamping materials, namely by single-stage stamping, when forming the wood screw **3.** Therefore, no waste material is generated. Hence, the wood screw **3** is provided with the enhanced structure strength and preferable screwing torsion resistance.

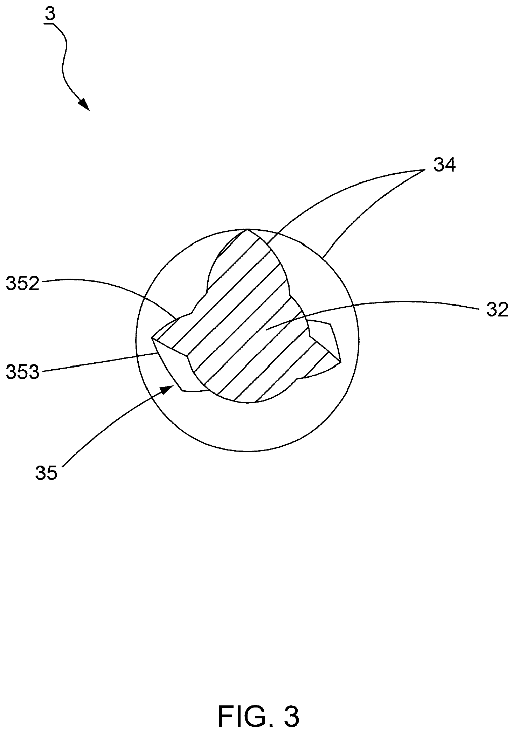

Referring to Fig. **2A** **and** Fig. **3****,** the first ribs **35** extend upwards and head in an extension direction dissimilar from a screwing direction of the wood screw **3,** namely the first ribs **35** extend in a levorotary direction. Each first rib **35** has two first surfaces **352** extending outwards from the shank **32** and a first edge **353** formed at a convergence of the first surfaces **352.** The first edges **353** are positioned in the screwing direction of the wood screw **3**. Therefore, the first ribs **35** enlarge a cutting area of the drilling portion **33** which assists with a cutting capability. In this preferred embodiment, two ends of each first rib **35** connect the thread convolutions of the threads **34.** Meanwhile, the second ribs **36** have a helical direction dissimilar from the extension direction of the first ribs **35.** Each second rib **36** has two second surfaces **362** extending outwards from the shank **32** and a second edge **363** formed at a convergence of the second surfaces **362.** The second edges **363** of the second ribs **36** are orientated in the screwing direction. Further, at least one first rib **35** extends upwards toward the shank **32** and terminates at a first end **351.** At least one second rib **36** spirally extends toward the drilling portion **33** and terminates at a second end **361.** The second end **361** is positioned relative to the first end **351,** as shown in Fig. **2A****.**

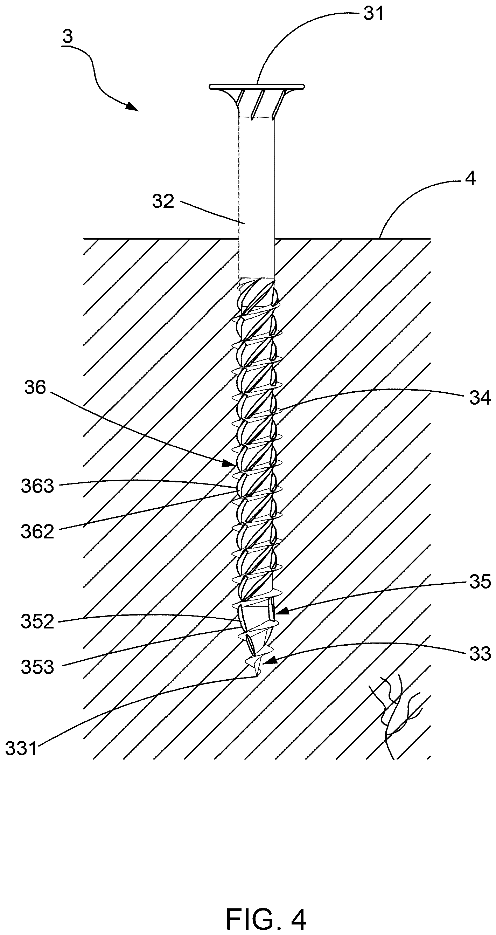

Referring to Fig. **2** and Fig. **4****,** during a screwing operation of the wood screw **3,** the tip **331** of the drilling portion **33** is positioned against to an object **4** firstly. Then, the head **31** receives the rotation force from a driving tool (not shown) to render the tip **331** to press and move downwards into the object **4** and synchronously carry out the screwing actions of the threads **34** and the first ribs **35** that are formed on the drilling portion **33.** Hence, the wood screw **3** gradually threads into the object **4** during the screwing operation. Because the first ribs **35** projecting outwards from the drilling portion **33** enlarge a cutting area of the drilling portion **33,** the enlarged cutting area assists in reaming the object **4.** Further, the first ribs **35** and the thread convolution of the threads **34** constitutes three cutting points in cross section. In other words, the first surfaces **352** of the first ribs **35** which extend in the direction different from the screwing direction excavate the object **4** first. After that, the first edges **353** which are orientated in the screwing direction assist in breaking cut chips and severing fibers entangled around the drilling portion **33** at the beginning of the screwing operation. Therefore, the reaming operation by scraping the objects **4** and breaking the cut chips provides the wood screw **3** with the stable screwing effect. Meanwhile, the resistance derived from the friction is effectively reduced and the screwing torsion caused by pressing the cut chips and the entanglement of the fibers is decreased at the beginning of the screwing operation. Further, the cut chips are evacuated along the first ribs **35** and the threads **34** to the outside because the first ribs **35** connect the thread convolutions of the threads **34.** Therefore, the stable, speedy and effort-saving screwing effect is attained at the beginning of the screwing operation. Besides, the rotation force for threading the wood screw **3** into the object **4** is reduced and the screwing speed is accelerated to facilitate the following threading operation of the threads **34** into the object **4.** Moreover, when the cut chips generated during the cutting operation of the threads **34** are evacuated to the outside and the shank **32** gradually threads into the object **4,** the second surfaces **362** of the second ribs **36** can push the cut chips near the shank **32** and the second edges **363** further sever the entangled fibers, thereby attaining the smooth threading operation of the shank **32** and increasing the screwing efficiency effectively. Thus, the first ribs **35** and the second ribs **36** assist in the screwing operation of the wood screw **3,** thereby enhancing the cutting effect, reducing the friction between the wood screw **3** and the object **4,** saving the rotation force and operation time for screwing the wood screw **3** into the object **4,** and achieving the screwing and positioning effects quickly.

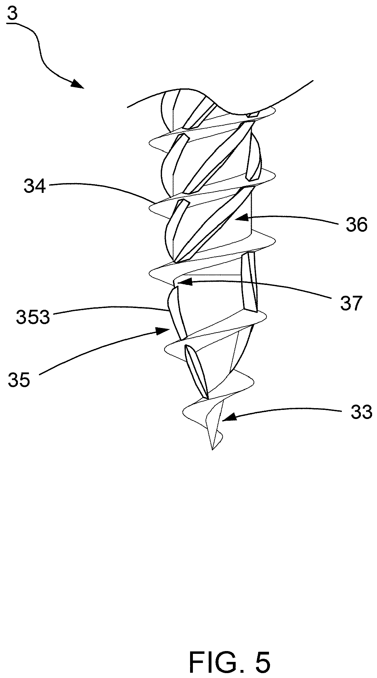

Referring to Fig. **5** shows a second preferred embodiment of the wood screw **3** of this invention. The correlated elements and the concatenation of elements, the operation and objectives of the second preferred embodiment are the same as those of the first preferred embodiment. This embodiment is characterized in that the first rib **35** has at least one end disconnected with at least one thread convolution of the threads **34** to form a space **37.** Certainly, two ends of each first rib **35** can be disconnected with the thread convolutions of the threads **34** to form two spaces **37** (not shown). Here takes an example that an end of the first rib **35** is separated from the thread convolution of the threads **34** to form the space **37.** Therefore, when the first ribs **35** help the drilling portion **33** ream the object **4** (not shown), the first edges **353** assist the threads **34** formed around the drilling portion **33** in severing the fibers entangled around the drilling portion **33** to position the wood screw **3** quickly. Meanwhile, the cut chips occurred at the beginning of the screwing operation can be excluded through the space **37** along the threads **34** to the outside, thereby preventing the threads **34** which are disposed around the drilling portion **33** from being pressed by the cut chips and preventing the screwing speed from slowing down. Thus, the screwing efficiency becomes smooth, the rotation force for screwing the wood screw **3** into the object **4** is reduced greatly, and the fast screwing and positioning effect is attained effectively.

Therefore, the wood screw **3** of this invention compared with the conventional fastener **1** is provided with advanced advantages and effects. First, the first ribs **35** formed on the drilling portion **33** extend the cutting area to facilitate the cutting capability and ream the object **4** firstly. Meanwhile, the first ribs **35** and the thread convolution cooperate to form three cutting points in cross section. Therefore, the first surfaces **352** of the first ribs **35** which extend in the direction different from the screwing direction excavate the cut chips, and thence the first edges **353** which are orientated in the screwing direction break the cut chips and the fibers, thereby reducing the resistance derived from the entanglement of the fibers during the screwing operation, increasing the screwing efficiency, facilitating the following threading operation of the threads **34,** saving the rotation force for screwing the wood screw **3** into the object **4,** and attaining the stable, fast and effort-saving screwing and positioning effects.

Second, the second ribs **36** disposed between the threads **34** can timely push the cut chips which press the shank **32** when the shank **32** keeps threading into the object **4.** Meanwhile, the second edges **363** assist in breaking the cut chips and severing the fibers to allow the shank **32** to thread into the object **4** smoothly. Further, the cut chips are pushed by the second ribs **36** properly to be evacuated to the outside smoothly, thereby preventing the cut chips from accumulating in the object **4,** preventing the object **4** from cracking caused when the wood screw **3** keeps pressing the accumulated cut chips, reducing the friction between the wood screw **3** and the object **4** during the screwing operation, decreasing the screwing torsion and resistance, and increasing the screwing speed.

To sum up, the wood screw of this invention takes advantages of the two first ribs formed on the drilling position between two thread convolutions of the threads to enlarge the cutting area of the drilling portion, thereby attaining the stable reaming effect. Further, the first surfaces of the first ribs which head in the extension direction different from a screwing direction can shovel the object, and thence the first edges which are orientated in the screwing direction can break the shoveled cut chips and sever the fibers entangled around the drilling portion, thereby reducing the screwing resistance at the beginning of the screwing operation. Meanwhile, the second ribs disposed between the threads properly push the cut chips which press the shank, thereby smoothing the screwing effect, decreasing the screwing resistance between the wood screw and the object, and achieving the steady, speedy and effort-saving screwing effect.

While the embodiments of this invention are shown and described, it is understood that further variations and modifications may be made without departing from the scope of this invention.

## Claims

1. A wood screw (3) comprising a head (31), a shank (32) extending downwards from said head (31), a drilling portion (33) connected to an end of said shank (32) opposite to said head (31) and tapering off to a tip (331), and a plurality of threads (34) spirally formed around said shank (32) and said drilling portion (33);
wherein at least two first ribs (35) are formed on said drilling portion (33) between two adjacent thread convolutions of said plurality of threads (34), said at least two first ribs (35) extending upwards and heading in an extension direction different from a screwing direction, each of said at least two first ribs (35) having two first surfaces (352) extending outwards from said shank (32) and a first edge (353) formed at a convergence of said first surfaces (352), said first edges (353) of said two first ribs (35) being orientated in said screwing direction to enlarge an area of said drilling portion (33) which facilitates a cutting capability.

2. The wood screw (3) as claimed in claim 1, wherein said first rib (35) has at least one end disconnected with at least one thread convolution of said plurality of threads (34) to form a space (37) .

3. The wood screw (3) as claimed in claim 1, wherein two ends of each of said at least two first ribs (35) connect said thread convolutions of said plurality of threads (34).

4. The wood screw (3) as claimed in claim 1, wherein said shank (32) includes a plurality of second ribs (36) spirally formed thereon and located between said plurality of threads (34), said plurality of second ribs (36) having a helical direction different from said extension direction of said at least two first ribs (35).

5. The wood screw (3) as claimed in claim 4, wherein at least one of said second ribs (36) spirally extends toward said drilling portion (33) and terminates at a second end (361), at least one of said first ribs (35) extending upwards toward said shank (32) and terminating at a first end (351), said second end (361) being situated relative to said first end (351).

6. The wood screw (3) as claimed in claim 4, wherein each of said plurality of second ribs (36) has two second surfaces (362) extending outwards from said shank (32) and a second edge (363) formed at a convergence of said second surfaces (362), said second edges (363) of said second ribs (36) being orientated in said screwing direction.
